# EUROPÄISCHE PATENTANMELDUNG

(11) **EP 4 071 975 A1**
(43) Veröffentlichungstag der Anmeldung: **12.10.2022**
(21) Anmeldenummer: 22164187.1
(22) Anmeldetag: 24.03.2022
(51) Int. Cl.: H02K 1/32, H02K 9/24, H02K 7/00

(54) **ELEKTRISCHE MASCHINE MIT EINEM RADIALWELLENDICHTRING**

(30) Priorität: 31.03.2021 DE 102021203302
(71) Anmelder: Valeo eAutomotive Germany GmbH, 91056 Erlangen (DE)
(72) Erfinder: Dietz, Andreas, 97616 c/o VSeA, Bad Neustadt a.d.Saale (DE); Holzheimer, Philipp, 97616 c/o VSeA, Bad Neustadt a.d.Saale (DE)
(74) Vertreter: Valeo Powertrain Systems

(57) **Zusammenfassung**

Elektrische Maschine (1), umfassend: ein Gehäuse (2), in dem ein Stator (3) und ein bezüglich des Stators (3) drehbarer Rotor (4) aufgenommen sind, eine Kühleinrichtung mit einem von einem Kühlmittel durchströmbaren Kühlkanal (5), der sich von einem Einlass (7) durch das Gehäuse (2) und durch den Rotor (4) bis zu einem Auslass (6) erstreckt, und eine Abdichteinrichtung (18) zum Abdichten des Rotors (4) gegenüber einem Innenraum (19) des Gehäuses (2), wobei die Abdichteinrichtung (18) einen den Rotor (4) umgebenden Radialwellendichtring (11) aufweist, der ein Reservoir (12) für Kühlmittelleckage begrenzt. Daneben werden ein Antriebsstrang für ein Fahrzeug (14) mit einer derartigen elektrischen Maschine (1) und ein Verfahren zum Betreiben der elektrischen Maschine (1) beschrieben.

## Beschreibung

Die Erfindung betrifft eine elektrische Maschine, umfassend ein Gehäuse, in dem ein Stator und ein bezüglich des Stators drehbarer Rotor aufgenommen sind, eine Kühleinrichtung mit einem von einem Kühlmittel durchströmbaren Kühlkanal, der sich von einem Einlass durch das Gehäuse und durch den Rotor bis zu einem Auslass erstreckt, und eine Abdichteinrichtung zum Abdichten des Rotors gegenüber einem Innenraum des Gehäuses.

Elektrische Maschinen dieser Art werden in zunehmendem Maße bei elektrisch angetriebenen Fahrzeugen oder Hybridfahrzeugen verwendet. Die elektrische Maschine wird dabei überwiegend als Elektromotor für den Antrieb eines Rads oder einer Achse des Fahrzeugs eingesetzt. Der Elektromotor kann unter anderem als Synchronmotor oder Asynchronmotor ausgebildet sein.

Der Elektromotor ist zumeist mechanisch mit einem Getriebe zur Drehzahlanpassung gekoppelt. Daneben ist der Elektromotor normalerweise elektrisch mit einem Wechselrichter verbunden, der aus einer von einer Batterie gelieferten Gleichspannung eine Wechselspannung für den Betrieb der elektrischen Maschine erzeugt, insbesondere eine mehrphasige Wechselspannung.

Es ist auch möglich, die elektrische Maschine als Generator zur Rekuperation von Bewegungsenergie eines Fahrzeugs zu betreiben, wobei die Bewegungsenergie zunächst in elektrische Energie und dann in chemische Energie der Batterie umgewandelt wird.

Der Rotor der elektrischen Maschine verfügt normalerweise über eine Rotorwelle, die von einem zylinderförmigen Rotorkörper umschlossen ist. Der Rotorkörper kann neben einem Paket laminierter Metallbleche unter anderem Permanentmagneten oder eine Wicklung mit einem elektrischen Leiter aufweisen.

Aufgrund der beim Betrieb der elektrischen Maschine entstehenden Wärme weist diese eine Kühleinrichtung zum Abführen der Wärme auf, die einen von einem flüssigen Kühlmittel durchströmbaren Kühlkanal umfasst. Der Kühlkanal erstreckt sich von einem Einlass durch das Gehäuse der elektrischen Maschine und weiter durch den Rotor bis zu einem Auslass, der in dem Gehäuse ausgebildet ist. Das Kühlmittel, bei dem es sich beispielsweise um eine Wasser-Glykol-Mischung handeln kann, wird in einem Kreislauf gefördert.

Eine Abdichteinrichtung dichtet den Rotor gegenüber dem Gehäuse ab. Insbesondere ist der mit Kühlmittel gefüllte Kühlkanal, welcher durch den Rotor verläuft, gegenüber einem Innenraum des Gehäuses abgedichtet, so dass kein Kühlmittel aus dem Kühlkanal in den Innenraum gelangen und dort zu einem Schaden führen kann, beispielsweise durch Korrosion. Der Innenraum kann unter anderem den Stator aufnehmen und ansonsten mit Luft gefüllt sein.

Die temperaturbedingte Volumenänderung der Luft im Inneren des Gehäuses macht es erforderlich, eine Belüftung bzw. Entlüftung vorzusehen, welche die Entstehung eines Unterdrucks oder eines Überdrucks in dem Gehäuse vermeidet. Dazu kann ein Entlüftungskanal vorgesehen sein, der sich von der Abdichteinrichtung bis zu einer Öffnung des Gehäuses erstreckt.

Es hat sich herausgestellt, dass beim Betrieb der elektrischen Maschine trotz der Abdichteinrichtung eine zumindest geringe technische Leckage von Kühlmittel über die Abdichteinrichtung auftreten kann. Diese technische Leckage (Kühlmittelleckage) tritt insbesondere dann auf, wenn die elektrische Maschine in einer bestimmten Drehrichtung betrieben wird. Bei einem mit der elektrischen Maschine angetriebenen Fahrzeug kann die Leckage zum Beispiel bei einer Rückwärtsfahrt auftreten.

Es wurde bereits vorgeschlagen, die technische Leckage in einem vom Gehäuse der elektrischen Maschine separierten Reservoir zu sammeln, also in einem speziellen Behälter. Dieser Behälter muss allerdings in bestimmten Zeitabständen im Rahmen der Wartung des Fahrzeugs entleert werden, was zu unerwünschtem Aufwand beziehungsweise Kosten führt.

Würde das Reservoir stattdessen in dem Gehäuse angeordnet, bestünde die Gefahr, dass Kühlmittelleckage aus dem Reservoir in einen Innenraum der Maschine gelangt und dort Schaden anrichtet. Der Schaden könnte beispielsweise durch Korrosion der Wicklungen eines in dem Innenraum abgeordneten Stators entstehen.

Zur Lösung des Problems wurde vorgeschlagen, ein Lager des Rotors der elektrischen Maschine mit einer Dichtung zu versehen, die ein Eindringen von Kühlmittelleckage in den Innenraum vermeidet. Allerdings ist die Dichtwirkung eines solchen abgedichteten Rotorlagers unzureichend, so dass trotzdem Kühlmittelleckage in den Innenraum gelangen kann.

Die Gefahr besteht insbesondere dann, wenn die Kühlmittelleckage aufgrund der Betriebswärme der elektrischen Maschine verdunstet beziehungsweise verdampft. Dadurch geht die Kühlmittelleckage vom flüssigen Aggregatzustand in den gasförmigen Aggregatzustand über, in dem die Kühlmittelleckage die von dem abgedichteten Rotorlager gebildete Barriere leicht überwinden kann.

Der Erfindung liegt die Aufgabe zugrunde, eine elektrische Maschine anzugeben, die mit geringerem Wartungsaufwand betrieben werden kann, wobei ein Schaden durch in einen Innenraum der Maschine eingedrungene Kühlmittelleckage vermieden wird.

Zur Lösung dieser Aufgabe ist bei einer elektrischen Maschine der eingangs genannten Art erfindungsgemäß vorgesehen, dass die Abdichteinrichtung einen den Rotor umgebenden Radialwellendichtring aufweist, der ein Reservoir für Kühlmittelleckage begrenzt.

Mit dem Radialwellendichtring kann das Eindringen von Kühlmittelleckage in den Innenraum der elektrischen Maschine zuverlässig vermieden werden. Das ermöglicht das Anordnen des Reservoirs im Gehäuse der elektrischen Maschine, wo das Reservoir selbsttätig beziehungsweise automatisch entleerbar ist. Damit entfällt das Entleeren des Reservoirs bei einer Wartung. Die Maschine kann somit wartungsfrei betrieben werden, wodurch sich eine Kosteneinsparung ergibt.

Radialwellendichtringe werden in an sich bekannter Weise zum Abdichten von drehenden Wellen gegenüber der Umgebung verwendet. Ein Radialwellendichtring weist zumeist einen Außenmantel aus einem Elastomermaterial auf, in dem ein Versteifungsring aus Metall eingebettet ist. Am Innenradius des Radialwellendichtrings befindet sich eine die drehende Welle berührende Dichtung.

Ein weiterer Vorteil der Erfindung besteht darin, dass sich mit dem Anordnen des Reservoirs in dem Gehäuse gegenüber einem separaten Reservoir Bauraum einsparen lässt.

Zu bemerken ist, dass der Kühlkanal der elektrischen Maschine durch eine Rotorwelle des Rotors verläuft. Es ist jedoch auch denkbar, dass der Kühlkanal durch einen anderen Bestandteil des Rotors verläuft, zum Beispiel durch einen Rotorkörper des Rotors.

Vorzugsweise ist die Abdichteinrichtung zum Abdichten des Rotors in eine Radialrichtung und eine Axialrichtung ausgebildet. Dadurch wird vermieden, dass Kühlmittel aus dem Kühlkanal austritt und zum Beispiel in ein Lager der Rotorwelle gelangt. Die Abdichtung in Radialrichtung kann mit dem Radialwellendichtring realisiert sein. Die Abdichtung in Axialrichtung kann mit einer Gleitringdichtung realisiert sein, die ebenfalls zu der Abdichteinrichtung gehört.

Das Reservoir kann zwischen dem Radialwellendichtring und einem Gehäuse der elektrischen Maschine gebildet sein. Insbesondere kann das Reservoir zwischen dem Radialwellendichtring und einem das Gehäuse in Axialrichtung verschließenden Deckel gebildet sein. Der Deckel kann zum Beispiel eine Öffnung des Gehäuses verschließen, in welche der Rotor bei der Montage der elektrischen Maschine in Axialrichtung eingesetzt wird. Damit kann ein ohnehin vorhandener Freiraum für das Reservoir genutzt werden, so dass kein zusätzlicher Bauraum benötigt wird. Alternativ dazu kann das Reservoir auch zwischen dem Radialwellendichtring und einem anderen Bestandteil des Gehäuse als dem Deckel gebildet sein.

Vorzugsweise ist der Deckel mit einem Gießverfahren hergestellt. Auf diese Weise lassen sich große Stückzahlen des Deckels kostengünstig herstellen. Der Deckel kann vorzugsweise aus einer Aluminiumlegierung hergestellt sein, wodurch seine Masse besonders gering ist. Alternativ dazu kann der Deckel auch aus einem Kunststoff hergestellt sein, oder als ein umgeformtes Blech.

Eine Weiterbildung der Erfindung sieht vor, dass der Radialwellendichtring mit einer Fettfüllung versehen ist. Diese Fettfüllung vermindert die Reibung zwischen dem Radialwellendichtring und dem Rotor und verringert dadurch den Verschleiß der Dichtung. Zudem wird damit die Abdichtwirkung des Radialwellendichtrings verbessert.

Es kann auch vorgesehen sein, dass der Radialwellendichtring trockenlaufend ausgebildet ist. Bei einer trockenlaufenden Dichtung ist kein hydrodynamischer Gleitfilm vorhanden, somit ist in jedem Betriebszustand eine ausreichende Dichtwirkung sichergestellt.

Die oben genannte Aufgabe wird ferner mit einem Antriebsstrang für ein Fahrzeug gelöst, der eine elektrische Maschine gemäß der Erfindung aufweist. Zusätzlich kann der Antriebsstrang über ein mit der elektrischen Maschine gekoppeltes Getriebe und/oder einen mit der Maschine verbundenen Wechselrichter verfügen, mit dem eine zum Betreiben der elektrischen Maschine benötigte mehrphasige Wechselspannung bereitstellbar ist.

Die Aufgabe wird weiterhin mit einem Fahrzeug gelöst, das einen derartigen Antriebsstrang aufweist.

Die Aufgabe wird ferner mit einem Verfahren zum Betreiben einer elektrischen Maschine gemäß der Erfindung gelöst. Die Maschine weist ein Gehäuse, in dem ein Stator und ein bezüglich des Status drehbarer Rotor aufgenommen sind, eine Kühleinrichtung mit einem von einem Kühlmittel durchströmbaren Kühlkanal, der sich von einem Einlass durch das Gehäuse und durch den Rotor bis zu einem Auslass erstreckt, und eine Abdichteinrichtung zum Abdichten des Rotors gegenüber einem Innenraum des Gehäuses auf.

Das erfindungsgemäße Verfahren zeichnet sich dadurch aus, dass ein Reservoir für Kühlmittelleckage von einem Radialwellendichtring begrenzt wird, der den Rotor umgibt.

Die im Zusammenhang mit der Beschreibung der elektrischen Maschine erläuterten Vorteile und Einzelheiten gelten sinngemäß selbstverständlich auch für das erfindungsgemäße Verfahren.

Die Erfindung wird nachfolgend anhand eines Ausführungsbeispiels unter Bezugnahme auf die Zeichnungen erläutert. Die Zeichnungen sind schematische Darstellungen und zeigen:
- Fig. 1: eine perspektivische geschnittene Ansicht einer erfindungsgemäßen elektrischen Maschine;
- Fig. 2: eine vergrößerte Ansicht des in Fig. 1 rechten Endes der Rotorwelle;
- Fig. 3: ein Detail der Abdichteinrichtung; und
- Fig. 4: ein erfindungsgemäßes Fahrzeug.

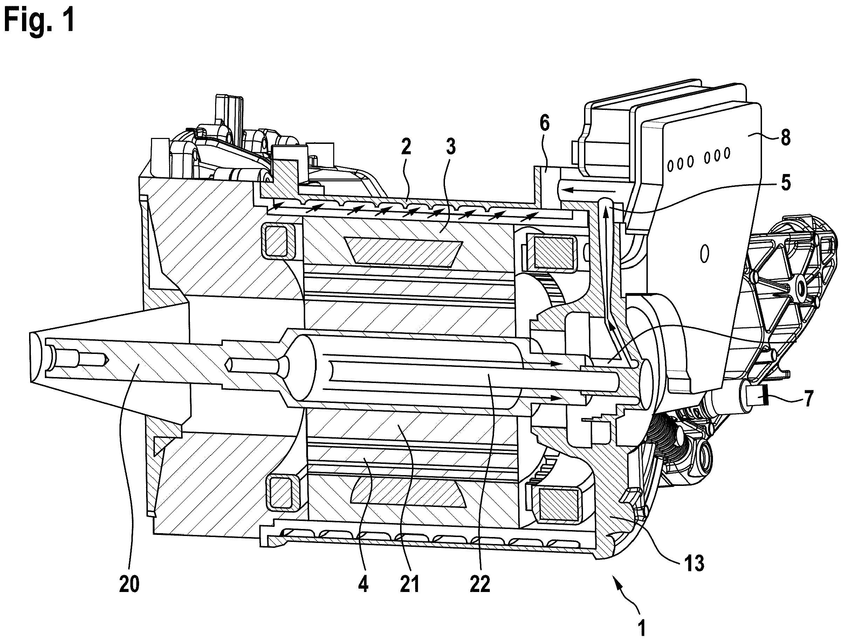

Die in **Fig. 1** in einer perspektivischen geschnittenen Ansicht gezeigte elektrische Maschine 1 gehört zum Antrieb eines Fahrzeugs. Alternativ dazu kann die elektrische Maschine 1 auch eine andere Funktion haben.

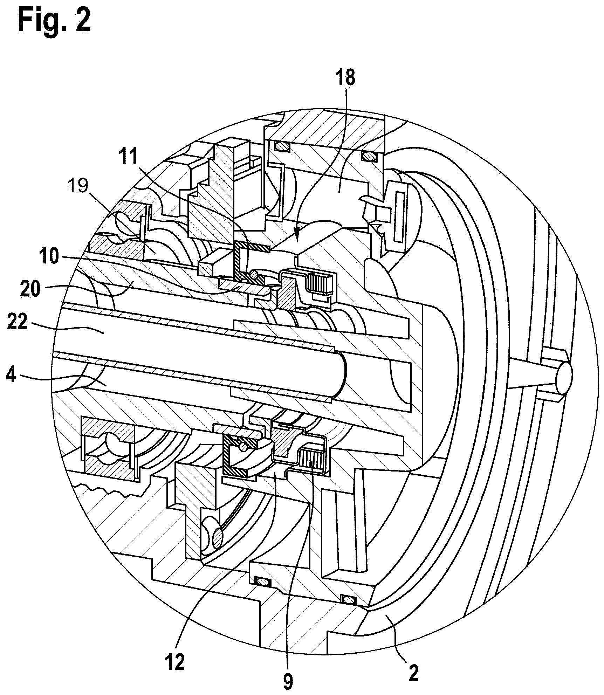

Die elektrische Maschine 1 umfasst ein Gehäuse 2 mit einem Innenraum 19 (siehe Fig. 2), in dem ein Stator 3 und ein bezüglich des Stators 3 drehbarer Rotor 4 mit einer Rotorwelle 20 aufgenommen sind. Die Rotorwelle 20 ist von einem zylinderförmigen Rotorkörper 21 umschlossen. Die elektrische Maschine 1 umfasst weiterhin eine Kühleinrichtung mit einem von einem Kühlmittel durchströmbaren Kühlkanal 5, der sich von einem Einlass 7 durch das Gehäuse 2 bis zu einem Auslass 6 erstreckt.

Der Einlass 7 und der Auslass 6, die auch miteinander vertauscht sein können, sind über nicht dargestellte Kühlmittelleitungen mit einer Pumpe verbunden, sodass das Kühlmittel in einem Kreislauf gefördert wird. Das Kühlmittel führt bei dem Betrieb der elektrischen Maschine 1 erzeugte Wärme ab.

In Fig. 1 erkennt man, dass sich der Kühlkanal 5 von dem Einlass 7 durch das Gehäuse 2 erstreckt. Das Kühlmittel strömt durch ein Kühlrohr 22 (auch als "Lanze" bezeichnet) in die hohle Rotorwelle 20 des Rotors 4 hinein. Am Ende des Kühlrohrs 22 wird die Strömungsrichtung des Kühlmittels umgekehrt, wonach das Kühlmittel an einer Innenwand der Rotorwelle 20 entlang an einer Abdichteinrichtung 18 (siehe Fig. 2) vorbei aus der Rotorwelle 20 herausströmt und weiter zum Auslass 6 gelangt.

An der Außenseite des Gehäuses 2 ist ein Wechselrichter 8 angeordnet, der die für den Betrieb der elektrischen Maschine 1 benötigte mehrphasige Wechselspannung bereitstellt.

**Fig. 2** ist eine geschnittene Ansicht und zeigt das rechte Ende der in Fig. 1 dargestellten Rotorwelle 20. Die Abdichteinrichtung 18 dient zum Abdichten der Rotorwelle 20 in Radialrichtung und Axialrichtung gegenüber dem Gehäuse 2. Insbesondere dient die Abdichteinrichtung 18 zum Abdichten der Rotorwelle 20 gegenüber dem Innenraum 19 des Gehäuses 2, in dem der Stator 3 aufgenommen ist. Mit dem Abdichten wird vermieden, dass Kühlmittel in den Innenraum 19 gelangt und dort zum Beispiel zu Korrosion der Wicklungen des Stators 3 führt.

Die Abdichteinrichtung 18 umfasst eine Gleitringdichtung 9 und einen Radialwellendichtring 11. Die Gleitringdichtung 9 ist in Axialrichtung zwischen dem (in Fig. 2 rechten) freien Ende der Rotorwelle 20 und einem Abschnitt des Gehäuses 2 angeordnet. Die Gleitringdichtung 9 dichtet die Rotorwelle 20 axial ab.

Das Ende des Rotors 4 ist von einer Hülse 10 aus gehärtetem Edelstahl umschlossen. Die Hülse 10 ist von einem Radialwellendichtring 11 umschlossen, der die Rotorwelle 20 radial gegenüber dem Innenraum 19 des Gehäuses 2 abdichtet. Der Radialwellendichtring 11 ist mit einer Fettfüllung versehen und als trockenlaufender Radialwellendichtring 11 ausgebildet.

Die Abdichteinrichtung 18 hat die Eigenschaft, dass bei einer bestimmten Drehrichtung der elektrischen Maschine, die der Rückwärtsfahrt des Fahrzeugs zugeordnet ist, die erwähnte technische Leckage entsteht. Allerdings weist diese technische Leckage lediglich ein geringes Volumen von einigen Millilitern auf.

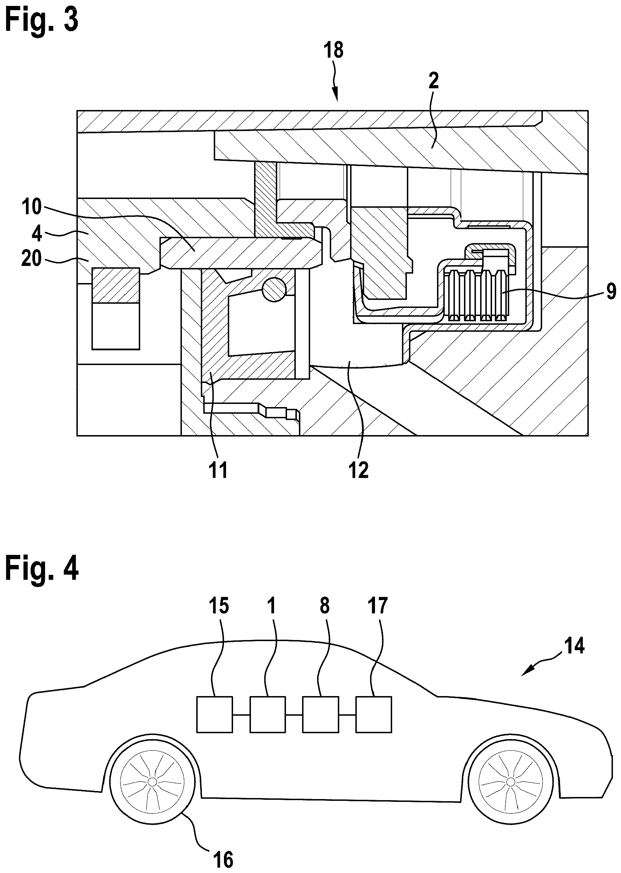

In der geschnittenen Ansicht von Fig. 2 und in der vergrößerten Ansicht von **Fig. 3**, die ein Detail der Abdichteinrichtung 18 zeigt, erkennt man, dass zwischen der Gleitringdichtung 9, dem Radialwellendichtung 11 und dem die Dichtungen umgebenden Abschnitt des Gehäuses 2 ein umlaufender Freiraum gebildet ist. Dieser Freiraum, insbesondere dessen im Einbauzustand unterer Bereich, dient als Reservoir 12 für die Kühlmittelleckage. Wenn durch den Betrieb der elektrischen Maschine 1, insbesondere bei Rückwärtsfahrt, die technische Leckage entsteht, sammelt sich diese in dem Reservoir 12.

Bei einer Umkehrung der Drehrichtung wird diese Kühlmittelleckage wieder über die Abdichteinrichtung 18 dem Kühlmittelkreislauf zugeführt. Wenn der Rotor 4 somit in die zur ersten Richtung entgegengesetzte Richtung gedreht wird, wird das Reservoir 12 wieder entleert.

Das Gehäuse 2 ist an seiner Axialseite durch einen Deckel 13 verschlossen. In dem dargestellten Ausführungsbeispiel besteht der Deckel 13 aus einer Aluminiumlegierung und ist durch Spritzgießen hergestellt.

Zusammenfassend wird Kühlmittelleckage, die bei einer Drehung des Rotors 4 in die erste Drehrichtung entsteht, in dem Reservoir 12 gesammelt und bei einer Drehung des Rotors 4 in eine entgegengesetzte zweite Drehrichtung mit der Gleitringdichtung 9 wieder aus dem Reservoir 12 heraus gefördert.

**Fig. 4** zeigt ein Fahrzeug 14 mit einem Antriebsstrang, der die elektrische Maschine 1 umfasst. Die elektrische Maschine 1 ist über ein Getriebe 15 mit einem Rad 16 des Fahrzeugs 14 gekoppelt. Daneben ist die elektrische Maschine 1 mit einem Wechselrichter 8 elektrisch verbunden. Die Batterie 17 liefert eine Gleichspannung, die mit dem Wechselrichter 8 in eine Wechselspannung für den Betrieb der elektrischen Maschine 1 umgewandelt wird.

### Bezugszeichenliste

- 1: elektrische Maschine
- 2: Gehäuse
- 3: Stator
- 4: Rotor
- 5: Kühlkanal
- 6: Auslass
- 7: Einlass
- 8: Wechselrichter
- 9: Gleitringdichtung
- 10: Hülse
- 11: Radialwellendichtring
- 12: Reservoir
- 13: Deckel
- 14: Fahrzeug
- 15: Getriebe
- 16: Rad
- 17: Batterie
- 18: Abdichteinrichtung
- 19: Innenraum
- 20: Rotorwelle
- 21: Rotorkörper
- 22: Kühlrohr

## Patentansprüche

1. Elektrische Maschine (1), umfassend:
- ein Gehäuse (2), in dem ein Stator (3) und ein bezüglich des Stators (3) drehbarer Rotor (4) aufgenommen sind,
- eine Kühleinrichtung mit einem von einem Kühlmittel durchströmbaren Kühlkanal (5), der sich von einem Einlass (6) durch das Gehäuse (2) und durch den Rotor (4) bis zu einem Auslass (6) erstreckt, und
- eine Abdichteinrichtung (18) zum Abdichten des Rotors (4) gegenüber einem Innenraum (19) des Gehäuses (2),
**dadurch gekennzeichnet, dass** die Abdichteinrichtung (18) einen den Rotor (4) umgebenden Radialwellendichtring (11) aufweist, der ein Reservoir (12) für Kühlmittelleckage begrenzt.

2. Elektrische Maschine nach Anspruch 1, wobei die Abdichteinrichtung (18) zum Abdichten des Rotors (4) in eine Radialrichtung und eine Axialrichtung ausgebildet ist.

3. Elektrische Maschine nach Anspruch 1 oder 2, wobei das Reservoir (12) zwischen dem Radialwellendichtring (11) und einem das Gehäuse (2) in Axialrichtung verschließenden Deckel (13) gebildet ist.

4. Elektrische Maschine nach Anspruch 3, wobei der Deckel (13) durch ein Gießverfahren hergestellt ist.

5. Elektrische Maschine nach Anspruch 3 oder 4, wobei der Deckel (13) aus einer Aluminiumlegierung hergestellt ist.

6. Elektrische Maschine nach einem der vorangehenden Ansprüche, wobei der Radialwellendichtring (11) mit einer Fettfüllung versehen ist.

7. Elektrische Maschine nach einem der vorangehenden Ansprüche, wobei der Radialwellendichtring (11) trockenlaufend ausgebildet ist.

8. Antriebsstrang für ein Fahrzeug (14), der eine elektrische Maschine (1) nach einem der Ansprüche 1 bis 7 aufweist.

9. Fahrzeug (14) mit einem Antriebsstrang nach Anspruch 8.

10. Verfahren zum Betreiben einer elektrischen Maschine (1), mit einem Gehäuse (2), in dem ein Stator (3) und ein bezüglich des Stators (3) drehbarer Rotor (4) aufgenommen sind, einer Kühleinrichtung mit einem von einem Kühlmittel durchströmbaren Kühlkanal (5), der sich von einem Einlass (7) durch das Gehäuse (2) und durch den Rotor (4) bis zu einem Auslass (6) erstreckt, und einer Abdichteinrichtung (18) zum Abdichten des Rotors (4) gegenüber einem Innenraum (19) des Gehäuses (2),
**dadurch gekennzeichnet, dass** ein Reservoir (12) für Kühlmittelleckage von einem Radialwellendichtring (11) begrenzt wird, der den Rotor (4) umgibt.
